# EUROPEAN PATENT APPLICATION

(11) **EP 2 026 550 A1**
(43) Date of publication of application: **18.02.2009**
(21) Application number: 07114535.3
(22) Date of filing: 17.08.2007
(51) Int. Cl.: H04M 3/523, H04M 3/42, H04M 7/00

(54) **Incoming call routing system and method for a VoIP network**

(71) Applicant: Voxbone SA, 1000 Bruxelles (BE)
(72) Inventor: Ullens de Schooten, Rodrigue, 1000, BRUSSELS (BE)
(74) Representative: Quintelier, Claude

(57) **Abstract**

A method for use in a Voice over Internet Protocol network for routing an incoming call (107,207) with a call destination identifier (110,210), such as a DID number, towards at least one available end point (102,102',202) of a plurality of end points (102,102',202) associated with that call destination identifier (110,210) and having different uniform resource identifiers. Said method comprises the steps of creating a single flexible uniform resource identifier for said cell destination identifier (110,210), linking the uniform resource identifier (111,211) of said at least one available end point (102,102',202) to said flexible uniform resource identifier, and routing an incoming call (107,207) with said call destination identifier (110,210) towards said at least one available end point (102,102',202) through its uniform resource identifier (111,211) and said flexible uniform resource identifier. Said at least one available end point (102,102',202) is recognised by performing at predetermined, preferably regular intervals an availability check of at least one of said plurality of end points (102,102',202), and recording an availability status (105,205) obtained by this check.

## Description

The present invention relates to a method and system for routing an incoming call with a call destination identifier towards at least one available end point of a plurality of end points with uniform resource identifiers (URIs) in a Voice over Internet Protocol (VoIP) network.

Conventionally, telephonic communications have been provided between terminals by a Public Switched Telephone Network (PSTN) using Time Division Multiplexing (TDM). The popularisation of broadband data networks supporting the Internet Protocol (IP) has provided an alternative to the PSTN through generally cheaper VoIP communications where the voice data are carried in packet form over an IP network to and/or from end points in that IP network such as, for example VoIP-enabled telephones, computer terminals and/or gateways to other networks.

A particularly appropriate application for a VoIP service is that of providing voice and related communication services for users with multiple end points, such as enterprises. With conventional PSTN systems, such a user would normally have a Private Branch Exchange (PBX) to connect its terminals between themselves and to the external PSTN. Such PBXs however, usually represented heavy investment and running costs for most users. Moreover, a PBX could normally only link terminals within one building or campus, a significant drawback for companies with facilities in several geographical locations which would thus need a PBX for each facility. With VoIP, all calls to and from the multiple end points of one user, as well as between them, can be routed through a single IP network all over the world. Routing incoming calls originating from an external PSTN does however present some challenges.

With a conventional PBX, the telephone company running the external PSTN would allocate a range of call destination identifiers, in the form of Direct Inward Dialling (DID) numbers, to the PBX. Incoming calls are presented to the PBX with the DID number to which they are directed, so that the PBX can route the call to the correct terminal.

A VoIP operator can also obtain a range of DID numbers from a PSTN operator. These DID numbers are then allocated to a gateway linking the VoIP network to the PSTN. It is even possible to obtain DID numbers from several different PSTN operators for a plurality of gateways, each one of them linking the VoIP network to a separate PSTN. Thus, an end point in that VoIP network could be called from each of said PSTNs at the cost of a local call.

Such VoIP networks with gateways to PSTNs have been disclosed in a number of documents, such as, for example, US Patent US 6,865,266, US Patent US 7,075,922, US Patent Application US 2006/0251054, US Patent US 7,069,331, US Patent US 6,678,359 or US Patent US 7,046,683.

To facilitate voice, video and data integration over the same network, the so-called Session Initiation Protocol (SIP) has been proposed by the Internet Engineering Task Force (IETF) in RFC2543. A description of a SIP-enabled VoIP network was disclosed in "High-Availability Solutions for SIP Enabled VoIP Networks", posted in http://www.cisco.com/en/US/tech/tk652/tk701/technologies_white_paper0 9186a00800a9818.shtml.

US Patent US 6,865,266 discloses a method and apparatus for transferring calls from a PSTN to a VoIP telephone network, wherein information such as call forwarding information on the status of an end point in the VoIP network may be stored in a Session Initiation Protocol (SIP) server or a Telephone Number Mapping (ENUM) database for determining, for instance whether a call directed to a VoIP telephone number can be successfully completed to the called number, will be redirected to another number and/or it will not be able to be completed. While this allows a VoIP telephone number to be used as a backup to another VoIP telephone number, this requires two different numbers which will have to be acquired as DID numbers by the VoIP operator at a certain cost. Moreover, this prior art does not disclose how said status information is obtained or eventually updated. The same drawbacks are present in US Patent US 7,075,922, which describes a method and system for screening inbound calls in a packet-based communications network, wherein standard messages are used between an inbound gateway, an inbound gatekeeper and an inbound screening database to decide whether an inbound call to a particular called number is to be allowed into the network.

US 2006/0251054 discloses a method and system for use in a Voice over Internet Protocol network for routing an incoming call with a DID number towards a first end point associated with said DID number. It also discloses the possibility to forward said call towards a different second end point by modifying the URI towards which this call is routed. However, it does not disclose how to determine whether the end points are available, nor under which specific conditions a call would be forwarded.

US Patent US 7,069,331 discloses a method and system for grouping trunk lines connecting a PSTN to a VoIP network and associating them to a single logical identifier. A resource manager routes communications directed to that single logical identifier to the physical gateway of one of the trunk lines according to predetermined instructions. This prior art however does not appear to address incoming calls from the PSTN to the VoIP network. It does not disclose how the availability of those physical gateways is determined and updated either.

US Patent US 6,678,359 discloses a method for providing called party identification in packet switched networks. According to this method, a caller addressing a call to a number in a VoIP network is offered a choice of possible receiving terminals. The availability of those terminals is however not considered.

US Patent US 7,046,683 discloses a method and system for providing VoIP over access networks. Redirecting calls to alternative, backup terminals is not considered.

The present invention relates to a method for use in a Voice over Internet Protocol network for routing an incoming call with a call destination identifier towards at least one available end point of a plurality of end points in said network which are associated with that call destination identifier and have different uniform resource identifiers, wherein said method comprises the steps of:
creating a single flexible uniform resource identifier for said call destination identifier;
linking the uniform resource identifier of said at least one available end point to said flexible uniform resource identifier; and
routing an incoming call with said call destination identifier towards said at least one available end point through its uniform resource identifier and said flexible uniform resource identifier.

By "call destination identifier" is understood any identifier, such as, for example, a Direct Inward Dialling number and/or a uniform resource identifier, associated to the incoming call to indicate its destination.

As VoIP network "end point" may be understood, for example, a VoIP-enabled telephone, a computer terminal and/or a gateway to another network.

The problem addressed by the present invention is that of recognising said at least one available end point from among said plurality of end points before routing said incoming call. For this purpose, in the method of the invention, said at least one available end point is recognised by checking and recording at predetermined, preferably regular intervals the availability of at least one of said plurality of end points.

Since an availability record is kept by these checks, it will be possible to link the URI of an available terminal to the flexible URI created for said call destination identifier in advance of receiving said incoming call. The call will thus be routed directly in real time to an available terminal without having to try to route it to unavailable terminals first. With the flexible URI this can be moreover be done without having to provide a different call destination identifier, such as a DID number, for each one of said plurality of end points.

Preferably, said VoIP network is SIP-enabled and the availability check is performed by sending a SIP request, preferably a SIP INVITE request, towards the at least one end point whose availability is to be checked and determining its response. This has the advantage of providing a simple and reliable availability check easily integrated in existing SIP-enabled VoIP networks.

Preferably, said plurality of end points comprises a primary end point and at least one backup end point, wherein said availability check is performed on at least said primary end point, so that the uniform resource identifier of at least one available backup end point will be linked to said flexible uniform resource identifier if said primary end point is not available. This has the advantage of giving priority to one preferred, primary end point for receiving inbound calls with said call destination identifier, while providing routing towards at least one backup end point, should the primary end point not be available.

Alternatively, said plurality of end points is ranked according to a set of load sharing parameters, said availability check is performed on all of said plurality of end points, and the uniform resource identifier linked to said flexible uniform resource identifier is the uniform resource identifier of the highest-ranked available end point of said plurality of end points. This alternative embodiment provides improved incoming call management when said plurality of end points includes a large number of end points for receiving large numbers of simultaneous incoming calls with said call destination identifier.

The present invention also relates to a routing system for use in a Voice over Internet Protocol network comprising:
a record comprising the uniform resource identifiers of a plurality of terminals, a call destination identifier, and a flexible uniform resource identifier associated both to the uniform resource identifiers of said plurality of terminals and to said call destination identifier;
means for receiving an incoming call with said call destination identifier and routing it towards any of said plurality of end points using their uniform resource identifiers; and
means for linking the uniform resource identifier of at least one available end point to said flexible uniform resource identifier so as to route said incoming call towards said at least one available end point through said flexible uniform resource identifier and the uniform resource identifier of said at least one available end point.

To solve the problem of recognising said at least one available end point among said plurality of end points, the system of the invention also comprises means for checking the availability status of at least one of said plurality of end points at predetermined, preferably regular intervals and storing it in said record.

Preferably, said means for recognising said at least one available end point comprise means for sending a Session Initiation Protocol request, preferably a SIP INVITE request, towards said at least one end point and determining its response.

Preferably, said plurality of end points comprises a primary end point and at least one backup end point, and said record comprises the availability state of said primary end point so as to route said incoming call towards at least one backup end point if said primary end point is not available.

Alternatively, said record comprises a ranking of said plurality of end points according to load sharing parameters, and the availability state of all end points so as to route said incoming call towards the highest-ranked available end point.

The invention also relates to a VoIP network comprising a routing system according to the invention and a plurality of end points.

Two embodiments of the invention will now be described illustratively, but not restrictively, with reference to the following drawings:
Fig. 1 is a schematic representation of a routing system according to a first embodiment of the invention; and
Fig. 2 is a schematic representation of a routing system according to a second embodiment of the invention.

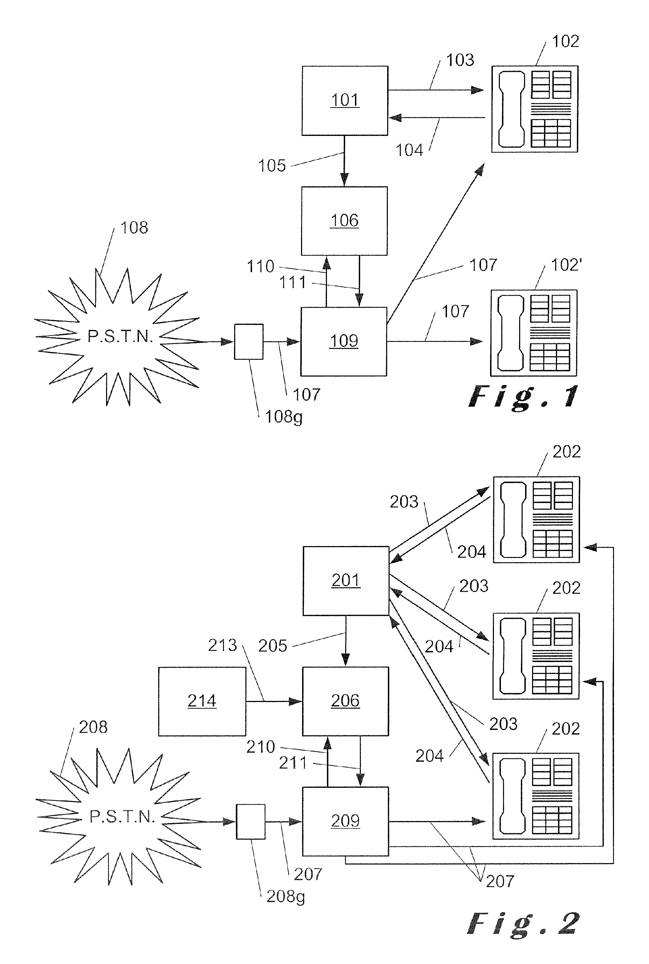

In the embodiment illustrated in Fig. 1, the VoIP network is a SIP-enabled VoIP network and a means 101 for checking the availability status of a primary end point 102 sends SIP INVITE requests 103 at regular intervals.

After each SIP INVITE request 103, said means 101 monitors the response 104 of the primary end point 102 so as to determine its availability status 105. Said availability status 105 is recorded in a record 106 also comprising the URIs of the primary end point 102 and of a backup end point 102', a call destination identifier associated with both said primary and backup end points 102,102' and a flexible URI associated with said call destination identifier. If the availability status 105 of the primary end point 102 is positive, the flexible URI will be linked with the URI of the primary end point 102. If the availability status 105 is however negative, the flexible URI will be linked with the URI of the backup end point 102'.

When an incoming call 107 is received at a routing means 109, the call destination identifier 110 of the incoming call 107 is checked against the record 106. If the call destination identifier 110 of the incoming call 107 matches the call destination identifier in the record 106, the flexible URI associated with said call destination identifier is called up to obtain the URI 111 of the primary or backup end point 102, 102' towards which the incoming call 107 is to be routed.

This embodiment can also be adapted to handle more than one single backup end point 102', in particular to cope with larger numbers of incoming calls. The availability checking means 101 may check the availability not just of the primary end point 102, but also of one or several backup end points 102', by also sending SIP INVITE requests to those backup end points 102' at regular terminals and monitoring their responses.

Fig. 2 illustrates a second embodiment of the invention more advantageous for handling large numbers of end points with the same call destination identifier. Instead of one primary end point and one or several backup end points, as in the first embodiment, the method of this embodiment uses a plurality of end points 202 in a ranking 213 according to a set of load-sharing parameters 214. In this embodiment, the VoIP network is also a SIP-enabled network and a means 201 for checking the availability of all end points 202 sends SIP INVITE requests 203 towards all end points 202, monitoring their responses 204 so as to determine their availability statuses 205. These availability statuses 205 are forwarded to a record 206, also containing the URIs of the end points 202, their ranking 213, a call destination identifier associated with said end points 102, and a flexible URI associated with said call destination identifier. The flexible URI will be linked with the URI 210 of the highest-ranked available end point 202.

When an incoming call 207 is received at a routing means 209, the call destination identifier 210 of the incoming call 207 is checked against the record 206. If the call destination identifier 210 of the incoming call 207 matches the call destination identifier in the record 206, the flexible URI associated with said call destination identifier is called up to obtain the URI 211 of the highest-ranked available end point 202, towards which the incoming call 207 is to be routed.

In Figs. 1 and 2, the VoIP network end points 102,102', 202 are represented as fixed-line VoIP phones, but they could also take the form of desktop or laptop computers, mobile VoIP phones or any other type of VoIP network end point, such as, in particular, a gateway to another network.

In the illustrated embodiments, the incoming calls 107, 207 are received from PSTNs 108, 208 over gateways 108g, 208g, and the call destination identifiers 110, 210 are DID numbers. However, the incoming calls could instead originate from the VoIP network itself, or from a separate VoIP network, in which case the call destination identifiers may be in the form of other URIs.

In the SIP-enabled VoIP networks of the illustrated embodiments, the routing means 109, 209 may be implemented in the form of so-called SIP proxy servers. The availability checking means 101, 201 may be implemented in the form of computer programs in the same SIP proxy servers or in separate programmable data processing devices, or even in the form of a separate dedicated data processing device. The records 106, 206 may be stored in any form of data storage device or medium directly and/or indirectly accessible by both the routing means 109,209 and the availability checking means 101,201.

Although the present invention has been described with reference to specific exemplary embodiments, it will be evident that various modifications and changes may be made to these embodiments without departing from the broader scope of the invention as set forth in the claims. Accordingly, the description and drawings are to be regarded in an illustrative sense rather than a restrictive sense.

## Claims

1. A method for use in a Voice over Internet Protocol network for routing an incoming call (107,207) with a call destination identifier (110,210) towards at least one available end point (102,102',202) of a plurality of end points (102,102',202) in said VoIP network, which are associated with that call destination identifier (110,210) and have different uniform resource identifiers, wherein said method comprises the steps of:
• creating a single flexible uniform resource identifier for said call destination identifier (110,210);
• linking the uniform resource identifier (111,211) of said at least one available end point (102,102',202) to said flexible uniform resource identifier; and
• routing an incoming call (107,207) with said call destination identifier (110,210) towards said at least one available end point (102,102',202) through its uniform resource identifier (111,211) and said flexible uniform resource identifier;
and is **characterized in that** said at least one available end point (102,102',202) is recognised by performing at predetermined, preferably regular intervals an availability check of at least one of said plurality of end points (102,102',202), and recording an availability status (105,205) obtained by this check.

2. A method according to claim 1, wherein said VoIP network is SIP-enabled and said availability check is performed by sending a Session Initiation Protocol request, preferably a SIP INVITE request (103,203), towards the at least one end point (102,102',202) whose availability is to be checked and monitoring its response.

3. A method according to claims 1 or 2, wherein said plurality of end points (102,102') comprises a primary end point (102) and at least one backup end point (102'), wherein said availability check is performed at regular intervals on at least said primary end point (102), so that the uniform resource identifier (111,211) of at least one available backup end point (102') will be linked to said flexible uniform resource identifier if said primary end point (102) is not available.

4. A method according to claims 1 or 2, wherein said plurality of end points (202) is ranked according to a set of load sharing parameters (214), said availability check is performed on all of said plurality of end points (202), and the uniform resource identifier (211) linked to said flexible uniform resource identifier is the uniform resource identifier (211) of the highest-ranked available end point (202) of said plurality of end points (202).

5. A routing system for use in a Voice over Internet Protocol network comprising:
• a record (106,206) comprising the uniform resource identifiers of a plurality of end points (102,102',202), a call destination identifier (110,210), and a flexible uniform resource identifier associated both to the uniform resource identifiers of said plurality of end points (102,102',202) and to said call destination identifier;
• means for receiving an incoming call (107,207) with said call destination identifier (110,210) and routing it towards any of said plurality of end points (102,102',202) using their uniform resource identifiers;
• means for linking the uniform resource identifier (111,211) of at least one available end point (102,102',202) to said flexible uniform resource identifier so as to route said incoming call (107,207) towards said at least one available end point (102,102',202) through said flexible uniform resource identifier and the uniform resource identifier (111,211) of said at least one available end point (102,102',202); and
**characterized in that** it further comprises:
• means (101,201) for checking the availability status of at least one end point (102,102',202) at predetermined, preferably regular intervals and storing it in said record (106,206).

6. A routing system according to claim 5, wherein said availability checking means (101,201) comprise means for sending a Session Initiation Protocol request, preferably a SIP INVITE request (103,203), towards said at least one end point (102,102',202) and determining its response (104,204).

7. A routing system according to any one of claims 5 or 6, wherein said plurality of end points (102,102') comprises a primary end point (102) and at least one backup end point (102'), and said record (106) comprises the availability state (105) of said primary end point (102) for routing said incoming call (107) towards at least one backup end point (102') if said primary end point (102) is not available.

8. A routing system according to any one of claims 5 or 6, wherein said record (206) comprises a ranking (213) of said plurality of end points (202) according to load sharing parameters (214), and the availability state (205) of all end points (202) for routing said incoming call (207) towards the highest-ranked available end point (202).

9. A VoIP network comprising a routing system according to any one of claims 5 to 8 and said plurality of end points (102,102',202).
